# EUROPEAN PATENT APPLICATION

(11) **EP 4 497 534 A1**
(43) Date of publication of application: **29.01.2025**
(21) Application number: 24186726.6
(22) Date of filing: 05.07.2024
(51) Int. Cl.: B23Q 3/10, F16B 2/14, F16B 37/04

(54) **AUTO-LOCKING SAFETY T-NUT**

(30) Priority: 26.07.2023 US 202318359135
(71) Applicant: General Electric Technology GmbH, 5400 Baden (CH)
(72) Inventor: PETROSKIE, Robert M., Greenville, 29615-4614 (US)
(74) Representative: Pfeffer, Frank

(57) **Abstract**

The present application provides a machining system for a workpiece. The machining system includes a rotary tooling plate with a T-slot and a T-nut positioned in the T-slot. The T-nut has a horizontal base with a wedge such that the wedge includes a locked position locking the T-nut in place within the T-slot and a released position allowing the T-nut to maneuver within the T-slot.

## Description

### TECHNICAL FIELD

The present application and the resultant patent relate generally to machining systems and tools and more particularly relate to a self-locking T-nut to prevent a workpiece or other object from being projected from a rotary tooling plate due to an operator's failure to secure properly the workpiece in place.

### BACKGROUND

In most machining operations, a workpiece must be securely fixed in place upon a rotary tooling plate or other type of rotary work surface. Examples of such surfaces include rotary tables, mill tables, fixtures or face plates, lathes, and the like. The workpiece must be secured upon the rotary tooling plate to expose a selected portion of the workpiece upon which work such as cutting or machining is to be performed. In addition, fine adjustment in the position and alignment of the workpiece may be required. Such adjustments may be time consuming.

Typically, the workpiece may be attached to a "T-slot" in the rotary tooling plate. Such a T-slot may be a grooved slot formed therein. One method of engaging the T-slot in the rotary tooling plate is with a bolt that passes through the object and engages a T-nut placed in the T-slot of the rotary tooling plate. The bolt may be tightened so as to draw the T-nut to bear against the T-slot geometry and thus clamp the workpiece to the rotary tooling plate. Although such rotary tooling plates with T-slots and T-nuts are effective in holding the workpiece in place, a workpiece that is not properly secured may be projected from the rotary tooling plate and create a safety hazard to the operators and the machinery.

### SUMMARY

The present application and the resultant patent thus provide a machining system for a workpiece. The machining system includes a rotary tooling plate with a T-slot and a T-nut positioned in the T-slot. The T-nut has a horizontal base with a wedge such that the wedge includes a locked position locking the T-nut in place within the T-slot and a released position allowing the T-nut to maneuver within the T-slot.

The present application and the resultant patent further provide a method of maneuvering a T-nut within a T-slot of a rotary tooling plate. The method may include the steps of attaching a wedge to a horizontal base of the T-nut by a bolt loaded with a spring, pushing the wedge away from the horizontal base by contracting the spring, maneuvering the T-nut within the T-slot, and releasing the spring to force the wedge adjacent to the horizontal base so as to lock the T-nut in place.

The present application and the resultant patent further may provide a machining system for a workpiece. The machining system may include a rotary tooling plate with a T-slot and a T-nut positioned in the T-slot. The T-nut may include a horizontal base with a wedge. The wedge may include a spring loaded bolt extending therethrough such that the horizontal plate and the wedge include a locked position with a first width and a released position with a second width.

These and other features and improvements of this application and the resultant patent will become apparent to one of ordinary skill in the art upon review of the following detailed description when taken in conjunction with the several drawings and the appended claims.

### BRIEF DESCRIPTION OF THE DRAWINGS

Fig. 1 is a schematic diagram of a machining system with a rotary tooling plate, a machining tool, and a workpiece.
Fig. 2 is a perspective view of a T-nut as may be described herein for use with the rotary tooling plate of Fig. 1.
Fig. 3 is a top plan view of the T-nut of Fig. 2.
Fig. 4 is a side plan view of the T-nut of Fig. 2.
Fig. 5 is a top sectional view of the T-nut of Fig. 2 taken along line 4-4 of Fig. 4.
Fig. 6 is a top plan view of the T-nut of Fig. 2 in the locked position.
Fig. 7 is a top plan view of the T-nut of Fig. 2 in the released position.

### DETAILED DESCRIPTION

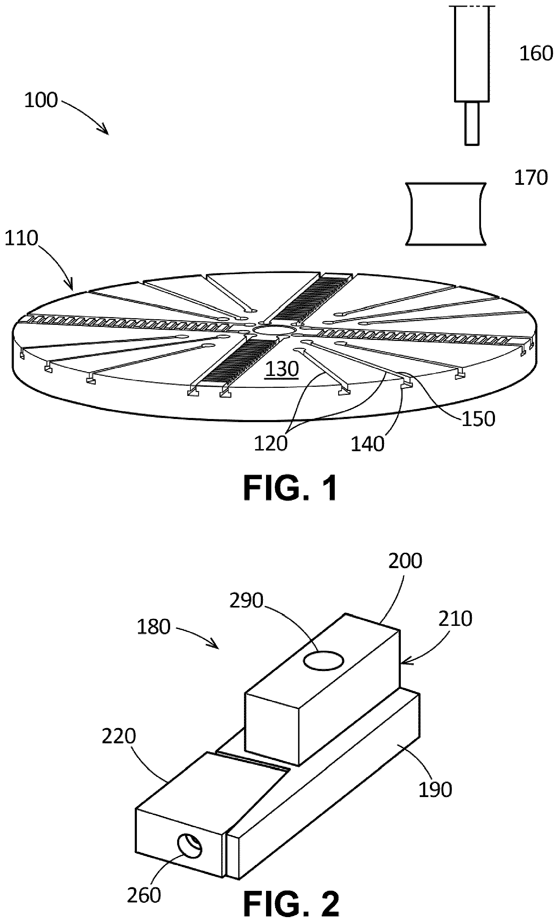

Referring now to the drawings, in which like numerals refer to like elements throughout the several views, Fig. 1 shows an exemplary machining system 100 as may be described herein. The machining system 100 may include a rotary tooling plate 110. The rotary tooling plate 110 may be of conventional design. The rotary tooling plate 110 may rotate at least about a vertical axis as well as maneuver up and down along the vertical axis. Current rotary tooling plates 110 may rotate through four or five axes. The rotary tooling plate 110 may include a number of T-slots 120 formed in a surface 130 thereof. Specifically, each T-slot 120 has a vertical channel 140 extending from the surface 130 that intersects with a horizontal channel 150. The size, shape, and configuration of the T-slots 120, the vertical channels 140, and the horizontal channels 150 may vary. Any number of the T-slots 120 may be used herein.

The machining system 100 may be used with one or more machining tools 160. The machining tools 160 may include a lathe or other type of device capable of cutting, milling, drilling, and the like. Any type of machining tool 160 may be used herein. A workpiece 170 may be secured to the rotary tooling plate 110 and may be machined by the machining tools 160. Any type of workpiece 170 may be used herein. In this example, the workpiece 170 may be a turbine component. Other components and other configurations may be used herein.

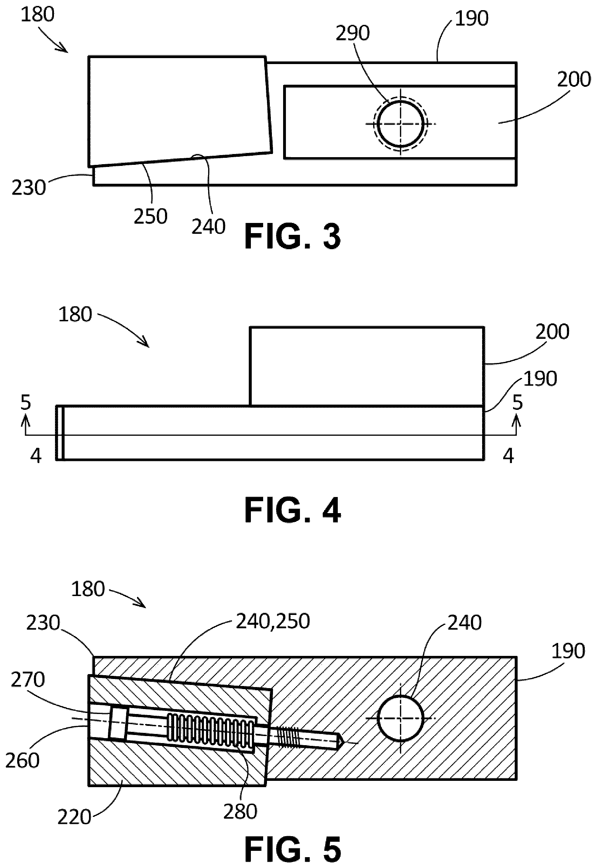

Figs. 2-5 show an example of a T-nut 180 as may be described herein for use with the rotary tooling plate 110. The T-nut 180 may include a horizontal base 190 and a vertical extension 200. The horizontal base 190 of the T-nut 180 may be sized and shaped for the horizontal channel 150 of the T-slot 120 and the vertical extension 200 of the T-nut 180 may be sized and shaped for the vertical channel 140 of the T-slot 120. The horizontal base 190 and the vertical extension 200 of the T-nut 180 may combine to form a substantial upside down "T"-like shape 210. The T-nut 180 may be made out of any substantially rigid material such as stainless steel and the like. Other materials, components, and configurations may be used herein.

The horizontal base 190 may include a wedge 220 attached thereto within a cut-out 230. The wedge 220 may have a slanted wedge face 240 and the cut-out 230 may have a complimentary slanted cut-out face 250 for slidable movement therewith. The wedge 220 may include a central aperture 260 extending along the length thereof. A threaded bolt 270 may extend through the central aperture 260 any may be secured within the body of the horizontal base 190. The threaded bolt 270 may be loaded by a spring 280. The threaded bolt 270 and the spring 280 may be of conventional design. The spring 280 may be biased so as to keep the wedge 220 adjacent to the horizontal base 190. When so positioned, a first width 300 of the combined horizontal base 190 and the wedge 220 may be greater than the width of just the horizontal base 190. When the wedge 220 is pushed outward along the slanted wedge face 240, a second width 310 of the combined horizontal base 190 and the wedge 220 may be equal to the width of just the horizontal base 190. Other components and other configurations may be used herein.

The vertical extension 200 and/or the vertical extension 200 and the horizontal base 190 may have a mounting aperture 290 positioned therethrough. The mounting aperture 290 allows the workpiece 170, fixturing, or other object to mounted securely to the rotary tooling plate 110 and the T-nut 180. The mounting aperture 290 may be threaded. More than one mounting aperture 290 may be used.

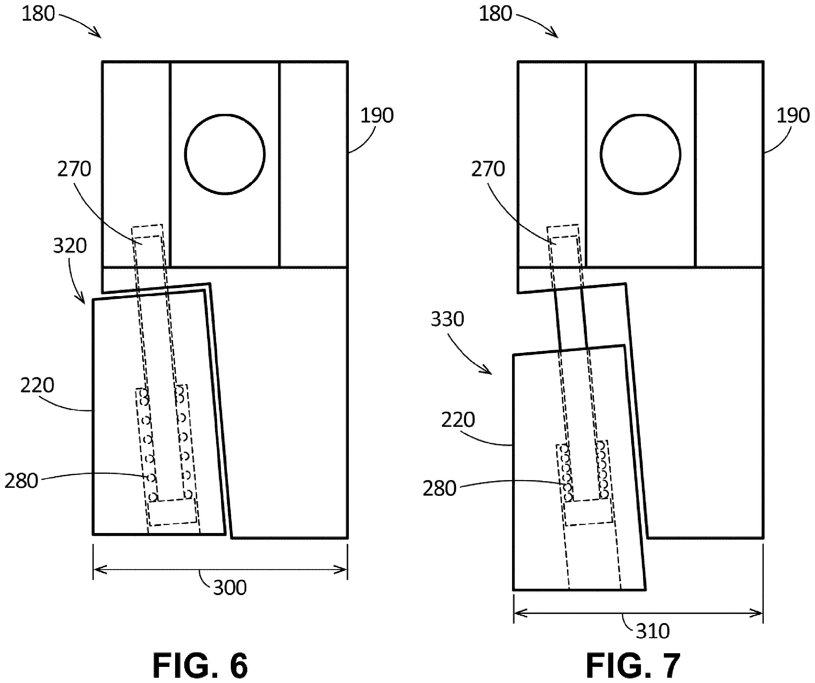

Figs. 6 and 7 show an example of the T-nut 180 in use. In a locked position 320 shown in Fig. 6, the spring 280 forces the wedge 220 into contact with the horizontal base 190. Given that the first width 300 of the combined horizontal base 190 and the wedge 220 is greater than just the width of the horizontal base 190, the T-nut 180 is locked into place within the T-slot 120 and cannot move.

In a released positon 330 shown in Fig. 7, the wedge 220 is pushed outward along the slanted wedge face 240 and the slanted cut-out face 250. Doing so reduces the overall width of the combined horizontal base 190 and the wedge 220 to that of the second width 310 or to just that of the horizontal base 190. Given this reduced width, the T-nut 180 now is free to maneuver along the T-slot 120 as desired. The wedge 220 may be forced into this retracted or released positon 330 by inserting and twisting, for example, the head of a screw driver and the like to push the wedge 220 along the slanted wedge face 240 and the slanted cut-out face 250. Any blunt object that can compress the spring 280 and push the wedge 220 outward may be used. Removing the screw driver or other object allows the spring 280 to again expand and force the wedge 220 back into position against the horizontal base 190 in the locked position 320.

The operator thus must actively engage the T-nut 180 in order to allow the T-nut 180 to move. If not, the T-nut 180 remains safely locked in place. The T-nut 180 thus is easy to use, relatively inexpensive to manufacture, and provides increased safety to operators and adjacent machinery. The surfaces of the T-nut 180 and/or the T-slots 120 may be gnarled or otherwise patterned or treated to increase the force of friction and the like therebetween.

It should be apparent that the foregoing relates only to certain embodiments of this application and resultant patent. Numerous changes and modifications may be made herein by one of ordinary skill in the art without departing from the general spirit and scope of the invention as defined by the following claims and the equivalents thereof.

Further aspects of the invention are provided by the subject matter of the following clauses:
1. A machining system for a workpiece, comprising: a rotary tooling plate; the rotary tooling plate comprising a T-slot; and a T-nut positioned in the T-slot; the T-nut comprising a horizontal base with a wedge; wherein the wedge comprises a locked position locking the T-nut in place within the T-slot and a released position allowing the T-nut to maneuver within the T-slot.
2. The machining system of any preceding clause, wherein the locked position comprises a first width of the horizontal base and the wedge and the released position comprises a second width of the horizontal base and the wedge.
3. The machining system of any preceding clause wherein the horizontal base comprises a cut-out therein and wherein the wedge is position within the cut-out.
4. The machining system of any preceding clause, wherein the wedge comprises a slanted wedge face and wherein the cut-out comprises a slanted cut-out face.
5. The machining system of any preceding clause, wherein the wedge comprises a central aperture therethrough.
6. The machining system of any preceding clause, wherein the wedge comprises a bolt extending therethrough.
7. The machining system of any preceding clause, wherein the bolt is secured in the horizontal base.
8. The machining system of any preceding clause, wherein the wedge comprises a spring surrounding the bolt.
9. The machining system of any preceding clause, wherein the spring biases the wedge into the locked position.
10. The machining separation tool of any preceding clause, wherein the T-nut comprises a vertical extension extending from the horizontal base.
11. The machining system of any preceding clause, wherein the T-slot comprises a vertical channel and a horizontal channel.
12. The machining system of any preceding clause, wherein the horizontal base of the T-nut is sized to accommodate the horizontal channel of the T-slot.
13. The machining system of any preceding clause, wherein the vertical extension of the T-nut is sized to accommodate the vertical channel of the T-slot.
14. The machining system of any preceding clause, wherein the vertical extension comprises a mounting aperture therein.
15. A method of maneuvering a T-nut within a T-slot of a rotary tooling plate, comprising: attaching a wedge to a horizontal base of the T-nut by a spring loaded bolt; pushing the wedge away from the horizontal base by contracting the spring; maneuvering the T-nut within the T-slot; and releasing the spring to force the wedge adjacent to the horizontal base so as to lock the T-nut in place.
16. A machining system for a workpiece, comprising: a rotary tooling plate; the rotary tooling plate comprising a T-slot; and a T-nut positioned in the T-slot; the T-nut comprising a horizontal base with a wedge; wherein the horizontal base and the wedge comprises a spring loaded bolt extending therethrough; and wherein the horizontal base and the wedge comprise a locked position with a first width and a released position with a second width.
17. The machining system of any preceding clause, wherein the bolt is secured in the horizontal base.
18. The machining system of any preceding clause, wherein the horizontal base comprises a cut-out therein and wherein the wedge is position within the cut-out.
19. The machining system of any preceding clause, wherein the wedge comprises a slanted wedge face and wherein the cut-out comprises a slanted cut-out face.
20. The machining system of any preceding clause, wherein the T-nut comprises a vertical extension extending from the horizontal base.

## Claims

1. A machining system for a workpiece, comprising:
a rotary tooling plate;
the rotary tooling plate comprising a T-slot; and
a T-nut positioned in the T-slot;
the T-nut comprising a horizontal base with a wedge;
wherein the wedge comprises a locked position locking the T-nut in place within the T-slot and a released position allowing the T-nut to maneuver within the T-slot.

2. The machining system of claim 1, wherein the locked position comprises a first width of the horizontal base and the wedge and the released position comprises a second width of the horizontal base and the wedge.

3. The machining system of claim 1, wherein the horizontal base comprises a cut-out therein and wherein the wedge is position within the cut-out.

4. The machining system of claim 3, wherein the wedge comprises a slanted wedge face and wherein the cut-out comprises a slanted cut-out face.

5. The machining system of claim 1, wherein the wedge comprises a central aperture therethrough.

6. The machining system of claim 5, wherein the wedge comprises a bolt extending through the central apeture.

7. The machining system of claim 6, wherein the bolt is secured in the horizontal base.

8. The machining system of claim 6, wherein the wedge comprises a spring surrounding the bolt.

9. The machining system of claim 8, wherein the spring biases the wedge into the locked position.

10. The machining system of claim 1, wherein the T-nut comprises a vertical extension extending from the horizontal base.

11. The machining system of claim 10, wherein the T-slot comprises a vertical channel and a horizontal channel.

12. The machining system of claim 11, wherein the horizontal base of the T-nut is sized to accommodate the horizontal channel of the T-slot.

13. The machining system of claim 11, wherein the vertical extension of the T-nut is sized to accommodate the vertical channel of the T-slot.

14. The machining system of claim 10, wherein the vertical extension comprises a mounting aperture therein.

15. A method of maneuvering a T-nut within a T-slot of a rotary tooling plate, comprising:
attaching a wedge to a horizontal base of the T-nut by a bolt loaded with a spring;
pushing the wedge away from the horizontal base by contracting the spring;
maneuvering the T-nut within the T-slot; and
forcing the spring to maneuver the wedge adjacent to the horizontal base so as to lock the T-nut in place.
